# EUROPÄISCHE PATENTSCHRIFT

(11) **EP 0 998 375 B1**
(45) Veröffentlichungstag und Bekanntmachung des Hinweises auf die Patenterteilung: **11.09.2002**
(21) Anmeldenummer: 98936391.6
(22) Anmeldetag: 25.06.1998
(51) Int. Cl.: B25B 23/14

(54) **ÜBERLASTKUPPLUNG**
SAFETY COUPLING
ACCOUPLEMENT A SECURITE ANTISURCHARGE

(30) Priorität: 25.07.1997 DE 29713253 U
(43) Veröffentlichungstag der Anmeldung: 10.05.2000
(60) Teilanmeldung: 02006734.4
(73) Patentinhaber: Maschinenfabrik Wagner GmbH & Co. KG, 53804 Much-Birrenbachshöhe (DE)
(72) Erfinder: BEYERT, Thomas, D-53804 Much (DE)
(74) Vertreter: Selting, Günther, Dipl.-Ing.
(86) Internationale Anmeldenummer: EP9803895
(87) Internationale Veröffentlichungsnummer: WO99004933

(56) Entgegenhaltungen:
- DE-A- 1 403 393
- DE-A- 2 433 995
- DE-A- 3 315 938
- DE-C- 683 190
- US-A- 2 733 622
- US-A- 2 968 979
- "Sinusoidal clutch gives screwdriver precise torque" PRODUCT ENGINEERING, Bd. 44, Nr. 2, Februar 1973, MC GRAW-HILL, NEW YORK, Seiten 14-15, XP002080526

## Beschreibung

Die Erfindung betrifft eine Überlastkupplung mit zwei von einer Federvorrichtung gegeneinandergedrückten Kupplungstellern, insbesondere zur Verwendung bei Schraubgeräten zum Zwecke des Festziehens einer Schraube mit einem vorbestimmten Drehmoment.

Aus DE 296 18 817 U ist eine Überlastkupplung bekannt, die in einem Gehäuse zwei Kupplungsteller aufweist. Die Kupplungsteller sind mit zusammengreifenden Profilierungen versehen und sie werden von einer Federvorrichtung gegeneinandergedrückt. Wenn der Schraubwiderstand einer festzuziehenden Schraube größer ist als das eingestellte Auslösemoment der Überlastkupplung, gelangen die Profilierungen außer Eingriff miteinander, so daß der erste Kupplungsteller durchdreht. Auf diese Weise kann das aufzubringende Drehmoment begrenzt werden. Allerdings verursachen die gegeneinanderliegenden Profilierungen der beiden Kupplungsteller Reibung, die das Auslösemoment in unvorhersehbarer Weise beeinflußt. Einerseits ist zu berücksichtigen, daß die Haftreibung größer ist als die Gleitreibung, die sich nach dem Verschieben der Profilierungen ergibt, und daß ferner die Gleitreibung aufgrund der Materialund Schmierbeschaffenheiten variieren kann.

Eine Überlastkupplung, von der der Oberbegriff des Patentanspruchs 1 ausgeht, ist bekannt aus US-A-2 968 979. Diese Überlastkupplung weist zylindrische Rollen auf, die radial zwischen zwei Kupplungstellern angeordnet sind. Beide Kupplungsteller haben Nester, die die radial außen liegenden Bereiche der Rollen eng umschließen. Die weiter innen liegenden Bereiche der Rollen sind in einem Käfig geführt. Hierbei konzentriert sich die Belastung der Rollen bei einer Verdrehung der Kupplungsteller relativ zueinander auf die radial äußeren Enden der Rollen. Hier tritt eine hohe örtliche Pressung auf. Die Tragfähigkeit der Rollen wird nur in den äußeren Bereichen genutzt. Bei hoher Belastung können Beschädigungen an der Kupplungsbahn auftreten.

DE-A-24 33 995 beschreibt eine Überlastkupplung mit zwei unmittelbar gegeneinandergedrückten Kupplungstellern. Beide Kupplungsteller haben an ihrer Stirnseite, die dem anderen Kupplungsteller zugewandt ist, eine periodisch in der Höhe variierende sinusförmige Kupplungsbahn. Die Wellenlänge der Kupplungsbahn verringert sich von außen nach innen. Hierbei erfolgt eine vollflächige Anlage der beiden Kupplungsbahnen. Das Auslösemoment ist daher stark reibungsabhängig.

Der Erfindung liegt die Aufgabe zugrunde, eine Überlastkupplung mit langgestreckten Mitnahmekörpern zu schaffen, bei der durch gleichmäßige Lastverteilung das Auslösemoment mit hoher Genauigkeit eingehalten werden kann.

Die Lösung dieser Aufgabe erfolgt erfindungsgemäß mit den im Anspruch 1 angegebenen Merkmalen.

Bei der erfindungsgemäßen Überlastkupplung ist die Kupplungsbahn generell radial zu dem betreffenden Kupplungsteller ausgerichtet. Dies bedeutet, daß die Vertiefungen der Kupplungsbahn keine parallelen Kanten oder Ränder oder sonstige Begrenzungen aufweisen. Sämtliche Höhenlinien verlaufen radial, so daß keine parallelen Höhenlinien existieren. Erfindungsgemäß besteht die Kupplungsbahn des Kupplungstellers aus einer Bahnfläche, die ein zu dem Kupplungsteller radial ausgerichteter Mitnahmekörper von gleicher Form und Größe wie die Mitnahmekörper beschreibt, der während einer gleichmäßigen Drehung des zweiten Kupplungstellers eine periodische Axialbewegung in bezug auf den zweiten Kupplungsteller ausführt. Hierdurch wird zugleich ein mögliches Herstellungsverfahren der Kupplungsbahn definiert. Die Herstellung einer für zylindrische oder teilzylindrische Mitnahmekörper geeigneten Kupplungsbahn kann nämlich mit einem rotierenden zylindrischen Fräser erfolgen, der axial zu dem Kupplungsteller ausgerichtet wird und mit seiner Umfangsfläche die Kupplungsbahn bearbeitet. Der rotierende Fräser wird axial zu dem Kupplungsteller bewegt, beispielsweise in einer sinusförmigen Hin- und Herbewegung, während der Kupplungsteller gleichmäßig um seine Achse herum gedreht wird. Der Fräser erzeugt dann die gewünschte Kontur der Kupplungsbahn. Auf dieser Bahn rollen oder gleiten später die Mitnahmekörper, die den gleichen Durchmesser haben wie der erzeugende Fräser. Wenn die Mitnahmekörper die Vertiefungen verlassen, liegen sie entlang einer exakten radialen Linie an der Kupplungsbahn an, also in Linienberührung. Dadurch wird erreicht, daß die Rolle auf ihrer gesamten Länge trägt bzw. abgestützt wird, und daß eine gleichmäßige Lastverteilung erfolgt. Aufgrund der ausschließlich radial zu dem Kupplungsteller ausgerichteten Berührungslinie erfolgt ein definiertes Abrollen oder Gleiten und ein ebenfalls definiertes Auslösen der Überlastkupplung dann, wenn die Rollen die Gipfelbereiche der Kupplungsbahn erreicht haben.

Es ist zu beachten, daß die mit den Mitnahmekörpern zusammenwirkenden Bereiche der Kupplungsbahn nicht zu nahe an die Achse des Kupplungstellers heranreichen dürfen, weil andernfalls die Linienberührung nicht bis zum Erreichen der Gipfel der Kupplungsbahn aufrechterhalten würde. Daher muß der innere (kleinere) Radius der Kupplungsbahn so groß sein, daß die Bahn an ihrem inneren Radius die gleiche Höhe hat wie am äußeren Radius.

Die erfindungsgemäße Überlastkupplung eignet sich besonders für große Lasten. Dies bedeutet, daß sie bei gegebener Last bzw. gegebenem Auslösemoment relativ kleinformatig und leichtgewichtig ausgebildet ist.

Vorzugsweise ist die Kontur der Kupplungsbahn auf dem äußeren Radius etwa sinusförmig. Dadurch wird ein gutes Abrollverhalten erzeugt. Die Gipfel der Sinusform können allerdings auch abgeflacht sein.

Die Oberfläche der Rollen muß nur in demjenigen Bereich zylindrisch sein, der mit der Kupplungsbahn zusammenwirkt. Alternativ ist es auch möglich, kegelförmige Rollen oder andere Rollen, deren Oberfläche durch Rotation einer Geraden erzeugt ist, zu verwenden.

Es ist auch möglich, jeden der beiden Kupplungsteller mit einer in der Höhe variierenden Kupplungsbahn zu versehen. In diesem Fall sind die Rollen in einem Rollkäfig geführt . Der Vorteil dieser Ausgestaltung besteht darin, daß die vollzylindrischen Mitnahmekörper an den Kupplungsbahnen beider Kupplungsteller abrollen können, ohne daß Gleitreibung entsteht. Hierdurch ergibt sich ein geringer Verschleiß und eine hohe Genauigkeit des Auslösemoments.

Wenn die Mitnahmekörper als Zylinderrollen ausgebildet sind, können anstelle einer einzigen Zylinderrolle jeweils zwei (oder mehr) Zylinderrollen vorgesehen sein, die axial zueinander ausgerichtet sind. Hierdurch wird der Geschwindigkeitsunterschied zwischen dem inneren und dem äußeren Teil der Kupplungsbahn besser ausgeglichen, da die außenliegenden Zylinderrollen eine größere Umfangsgeschwindigkeit haben können als die innenliegenden Zylinderrollen.

Im folgenden werden unter Bezugnahme auf die Zeichnungen Ausführungsbeispiele der Erfindung näher erläutert.

Es zeigen:
- Fig. 1: einen Längsschnitt eines ersten Ausführungsbeispiels der Überlastkupplung,
- Fig. 2: einen Schnitt entlang der Linie II-II von Fig. 1,
- Fig. 3: einen Schnitt entlang der Linie III-III von Fig. 1,
- Fig. 4: einen Schnitt entlang der Linie IV-IV von Fig. 1,
- Fig. 5: einen Axialschnitt durch den zweiten Kupplungsteller,
- Fig. 6: eine schematische Darstellung der Erzeugung der Kupplungsbahn,
- Fig. 7: eine Teil-Draufsicht aus Richtung des Pfeiles VII in Fig. 1,
- Fig. 8: einen Schnitt durch die Blockiervorrichtung im blockierenden Zustand,
- Fig. 9: in gleicher Darstellung wie Fig. 8 die Blockiervorrichtung im entsperrten Zustand,
- Fig. 10: eine Seitenansicht einer Ausführungsform bei der jeder der Kupplungsteller eine kontrollierte Kupplungsbahn aufweist.

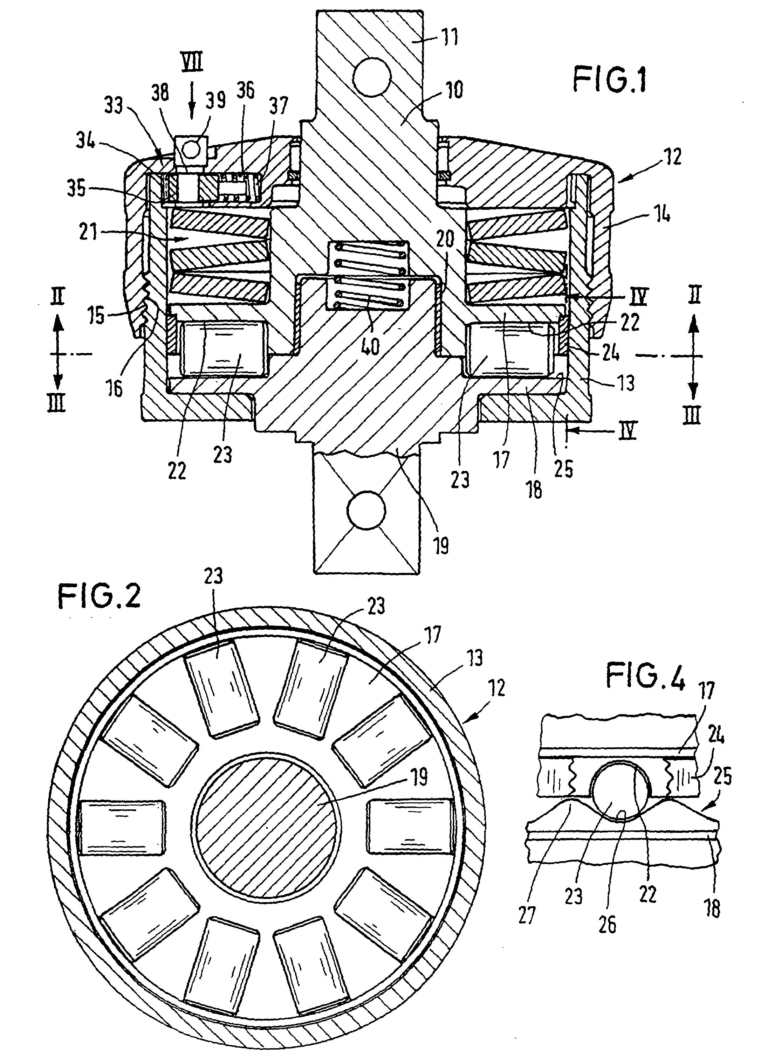

Die Überlastkupplung der Figuren 1 bis 9 weist eine Eingangswelle 10 auf, an die ein Schraubgerät in Form eines Kraftschraubers oder -eines manuellen Schraubers angesetzt werden kann. Zu diesem Zweck ist die . Eingangswelle mit einem Vierkant 11 versehen. Die Eingangswelle 10 ist in einem Gehäuse 12 gelagert, welches aus einer becherförmigen Gehäusekapsel 13 und einem ebenfalls becherförmigen Gehäusedeckel 14 besteht. Der Gehäusedeckel 14 ist mit einem Innengewinde 15 auf ein Außengewinde 16 der Gehäusekapsel 13 aufgeschraubt.

In dem Gehäuse 12 befindet sich ein erster Kupplungsteller 17, der mit der Eingangswelle 10 fest verbunden ist, und ein zweiter Kupplungsteller 18, der mit einer Ausgangswelle 19 fest verbunden ist. Der erste Kupplungsteller 17 enthält eine Ausnehmung, in der ein Gleitlagerring 20 zur Lagerung der Ausgangswelle 19 angeordnet ist. Die Ausgangswelle 19 ragt aus einer Öffnung im Boden der Gehäusekapsel 13 hindurch und der zweite Kupplungsteller 18 stützt sich auf dem Boden der Gehäusekapsel 13 ab. Durch die Reibung zwischen dem zweiten Gehäuseteller 18 und dem Boden der Gehäusekapsel 13 wird während des Drehbetriebes das Gehäuse 12 mit der Ausgangswelle 19 mitgedreht.

Im Gehäuse 12 ist ferner eine Federvorrichtung 21, die aus einem Tellerfederpaket besteht, angeordnet. Diese Federvorrichtung 21 stützt sich am Gehäusedeckel 14 ab und sie drückt den ersten Gehäuseteller 17 in Richtung auf den zweiten Gehäuseteller 18.

Der erste Gehäuseteller 17 weist an seiner dem zweiten Gehäuseteller 18 zugewandten Stirnfläche Nester 22 zur Aufnahme zylindrischer Rollen 23 auf, die hier als drehbare Zylinderrollen ausgebildet sind. Diese Nester 22 sind radiale Bohrungen, die jedoch umfangsmäßig nicht geschlossen sind und sich über einen Umfang von etwas mehr als 180° erstrecken, wie aus Fig. 4 hervorgeht. In das Nest 22 kann die Rolle 23 in axialer Richtung eingeführt werden. Die Rollen werden dann gegen Herausfallen durch einen Ring 24 gesichert, der um den Kupplungsteller 17 herumgelegt ist. Die zylindrischen Rollen 23 sind radial zu dem Kupplungsteller 17 hin ausgerichtet, wie insbesondere aus Fig. 2 hervorgeht. Sie ragen mit einem Teil ihres Umfangs aus der Stirnseite des Kupplungstellers 17 heraus. Der Kupplungsteller 17 bildet somit einen Rollenkäfig. Jedes Nest 22 ist teilzylindrisch ausgebildet und hat einen Durchmesser, der es der Rolle 23 ermöglicht, sich in dem Nest 22 um ihre Achse zu drehen.

Die dem ersten Kupplungsteller 17 zugewandte Stirnseite des zweiten Kupplungstellers 18 weist eine kreisförmige Kupplungsbahn 25 auf, auf der die Rollen 23 abrollen. Diese Kupplungsbahn 25 hat eine der Anzahl der Rollen 23 entsprechende Zahl von Vertiefungen 26 und Erhöhungen 27. Entlang des äußeren Radius der Kupplungsbahn 25 bilden die Erhöhungen und Vertiefungen eine sinusförmige Linie. Entlang des inneren Radius der Kupplungsbahn 25 sind die Vertiefungen 26 breiter als die Erhöhungen 27.

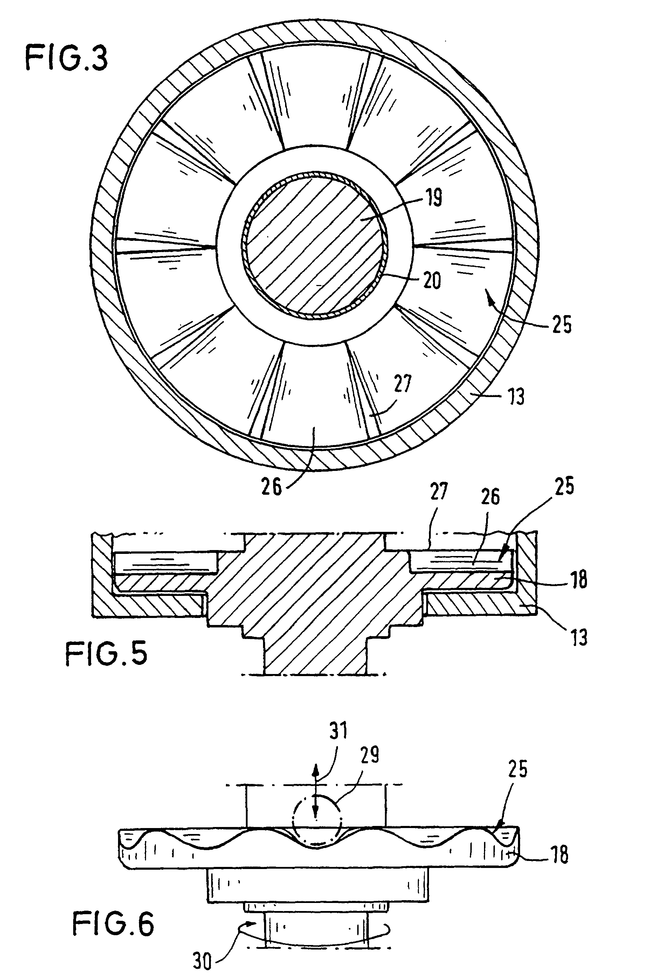

Die Kupplungsbahn 25 besteht gemäß Fig. 6 aus einer Bahnfläche, die ein zu dem zweiten Kupplungsteller 18 radial ausgerichteter Zylinder 29 von gleichem Durchmesser wie die Rollen 23 beschreibt, der während einer gleichmäßigen Drehung des zweiten Kupplungstellers 18 (Richtung des Pfeiles 30) eine periodische Axialbewegung (Doppelpfeil 31) in bezug auf den zweiten Kupplungsteller 18 ausführt. Die Bahnfläche ist dabei die Hüllkurve, die der Zylinder 29 an dem Kupplungsteller 18 beschreibt. Diese Hüllkurve entsteht dann, wenn der Zylinder 29 beispielsweise ein um seine Achse rotierender Fräser ist. Würde ein solcher Fräser allerdings zu weit nach innen (zur Achse der Ausgangswelle 19) ragen, so würde er mit seinem inneren Bereich die Erhöhung, die zwei Vertiefungen voneinander trennt, abtragen, bevor er mit seiner Unterseite auf die entsprechende Höhe angehoben worden ist. Daher darf der Zylinder 29 nur so weit an die Achse heranragen, daß die Kupplungsbahn 25 an ihrem inneren Radius immer noch die gleiche Höhe hat wie am äußeren Radius. Ebenso wie der Zylinder bzw. Fräser 29 die Kupplungsbahn 25 erzeugt, rollen später die Rollen 23 auf dieser Kupplungsbahn ab. Dabei hat jede Rolle 23 eine exakte Linienberührung mit der Kupplungsbahn 25, und zwar an jeder Stelle der Kupplungsbahn. Diese Linienberührung erstreckt sich über die gesamte Länge der Rolle 23.

Die Kupplungsbahn 25 bezeichnet nur denjenigen Streifen, der von den Rollen 23 berührt wird. Die Kontur der Kupplungsbahn kann sich nach innen fortsetzen, wobei die fortgesetzten Bereiche jedoch nicht mehr zur Bahnfläche gehören.

Bei einem auf die Eingangswelle 10 einwirkenden Drehmoment ist der Kupplungsteller 17 bestrebt, den Kupplungsteller 18 über die Rollen 23 mitzudrehen. Übersteigt das auf die Ausgangswelle 19 wirkende Lastmoment das eingestellte Kupplungsmoment, dann bleibt die Drehung des Kupplungstellers 18 zurück, wobei die Rollen 23 auf der Kupplungsbahn 25 zur jeweiligen Erhöhung 27 hin hochrollen. Hierbei wird die Federvorrichtung 21 zusammengedrückt. Werden die Erhöhungen 27 von den Rollen 23 überschritten, bedeutet dies, daß die Überlastkupplung auslöst und der Kupplungsteller 17 nunmehr dreht, während der Kupplungsteller 18 stehenbleibt. Das Auslösemoment der Überlastkupplung kann also durch Spannen der Federvorrichtung 21 eingestellt werden.

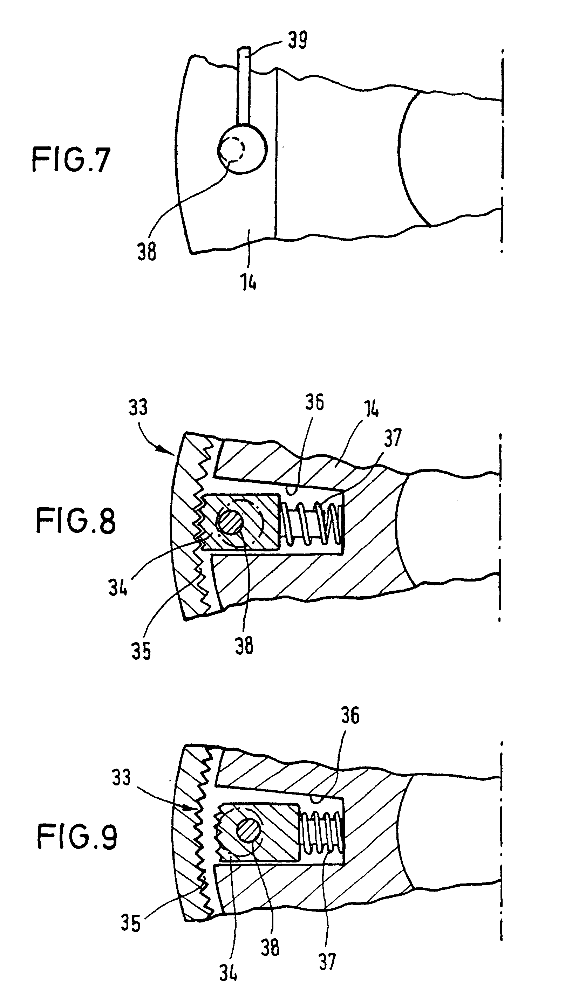

Das Einstellen des Auslösemoments erfolgt durch Drehen des Gehäusedeckels 14 relativ zu der Gehäusekapsel 13. Im Auslösefall der Kupplung treten axiale Schläge auf, durch die der Kupplungsdeckel 14 unbeabsichtigt verdreht werden kann, was eine Verstellung des Auslösemoments zur Folge hätte. Um eine solche Verstellung zu vermeiden, ist die Blockiervorrichtung 33 vorgesehen. Diese Blockiervorrichtung 33 weist ein Rastelement 34 auf, das mit einer Verzahnung versehen ist. Eine entsprechende Verzahnung 35 ist als Innenverzahnung am oberen Ende der Gehäusekapsel 13 angebracht. Das Rastelement 34 ist in einer Ausnehmung 36 des Gehäusedeckels 14 radial geführt und wird von einer Feder 37 nach außen gedrückt. Das Rastelement 34 wird von einem Exzenter 38 betätigt, der in der Stirnwand des Gehäusedeckels 14 gelagert ist und einen Hebel 39 zum Verdrehen aufweist. Durch Drehen des Exzenters 38 kann das Rastelement 34 entweder in die in Fig. 8 gezeigte Sperrposition oder in die in Fig. 9 gezeigte Freigabeposition gebracht werden. Die Innenverzahnung 35 hat eine solche Länge, daß das Rastelement sie in jeder der möglichen Stellungen des Gehäusedeckels erreichen kann.

Bei dem geringstmöglichen eingestellten Auslösemoment der Überlastkupplung ist die Federvorrichtung 21 im wesentlichen ungespannt, damit das Verstellen ohne zu großen manuellen Kraftaufwand möglich ist. Damit die Kupplungsteile im Innern der Kupplung nicht klappern, ist eine Feder 40 vorgesehen, die die beiden Kupplungsteller 17,18 auseinanderdrückt und damit der Federvorrichtung 21 entgegenwirkt. Die Feder 40 ist jedoch sehr weich, so daß ihre Kraft diejenige der Federvorrichtung 21 nicht beeinträchtigt.

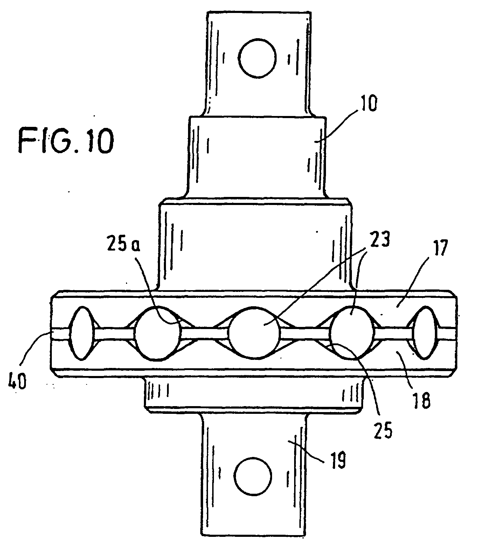

Bei dem Ausführungsbeispiel von Figur 10 sind nur die Eingangswelle 10 und die Ausgangswelle 19 mit den beiden Kupplungstellern 17,18 dargestellt. Das Gehäuse und die übrigen Teile sind in gleicher Weise ausgebildet wie bei dem ersten Ausführungsbeispiel. Gemäß Figur 11 sind die Rollen 23 in einem Rollenkäfig 40 geführt und in gegenseitigem Abstand gehalten. Der Kupplungsteller 18 ist mit einer Kupplungsbahn 25 versehen, die in gleicher Weise ausgebildet ist wie diejenige des ersten Ausführungsbeispiels. Der Kupplungsteller 17 ist an seiner Stirnseite ebenfalls mit einer entsprechenden Kupplungsbahn 25a ausgestattet, wobei im Normalzustand jede Rolle 23-in zwei einander gegenüberliegende Vertiefungen der Kupplungsbahnen 25 und 25a sitzt. Der Vorteil dieser Ausführung liegt darin, daß durch das gleiche Profil der beiden Kupplungsbahnen 25,25a die gleichen Kräftepaare von oben und unten auf die Rollen 23 einwirken. Beim Verdrehen der Kupplungsteller zueinander wird aufgrund des gleichen Profils die gleiche Wegstrecke entlang der Rollen 23 zurückgelegt. Dadurch wird erreicht, daß die zylindrischen Rollen 23 sich nahezu gleitreibungsfrei drehen.

## Patentansprüche

1. Überlastkupplung mit zwei Kupplungstellern (17,18), von denen mindestens einer eine periodisch in der Höhe variierende Kupplungsbahn (25) aufweist, auf der zwischen den Kupplungstellern vorgesehene Rollen (23) abrollen einem die Kupplungsteller (17,18) umgebenden Gehäuse (12) und einer an dem Gehäuse (12) abgestützten, die Kupplungsteller (17,18) gegeneinanderdrückenden Federvorrichtung (21), wobei die Rollen in radialer Ausrichtung zu den Kupptellern (17,18) und in festem zur Periodizität der mindestens einen Kupplungsbahn (25) korrespondierendem Abstand zueinander gehalten sind,
**dadurch gekennzeichnet,**
**daß** die Kupplungsbahn (25) aus einer Bahnfläche besteht, die ein zu dem betreffenden Kupplungsteller (18) radial ausgerichteter Referenzkörper (29) von gleicher Form und Größe wie die Rollen (23) beschreibt, der während einer gleichmäßigen Drehung dieses Kupplungstellers (18) eine periodische Axialbewegung in bezug auf den Kupplungsteller ausführt.

2. Überlastkupplung nach Anspruch 1, **dadurch gekennzeichnet, daß** die Kontur der Kupplungsbahn (25) auf dem äußeren Radius etwa sinusförmig ist.

3. Überlastkupplung nach Anspruch 1 oder 2, **dadurch gekennzeichnet, daß** einer der Kupplungsteller (17,18) Nester (22) aufweist, die Rollen (23) um mehr als 180° umgreifen.

4. Überlastkupplung nach Anspruch 1 oder 2, **dadurch gekennzeichnet, daß** jeder der Kupplungsteller (17,18) eine Kupplungsbahn aufweist und daß die Rollen (23) in einem Rollenkäfig (40) geführt sind.

5. Überlastkupplung nach einem der Ansprüche 1-4, **dadurch gekennzeichnet, daß** der äußere Radius der Kupplungsbahn (25) etwa doppelt so groß ist wie der innere Radius.

6. Überlastkupplung nach einem der Ansprüche 1-5, **dadurch gekennzeichnet, daß** jeweils zwei oder mehr Rollen (23) in einer Reihe axial zueinander angeordnet sind.

## Claims

1. Safety coupling comprising two coupling disks (17,18) at least one of which having a coupling track (25) periodically varying in height, on which rollers (23) provided between the coupling disks perform a rolling movement, a housing (12) surrounding the coupling disks (17,18) and a spring device (21) supported on the housing (12) and pressing the coupling disks (17,18) against each other, the rollers being held in radial orientation with respect to the coupling discs (17, 18) and at a fixed distance with respect to each other corresponding to the periodicity of the at least one coupling track (25),
**characterized in that**
the coupling track (25) is a path described by a reference body (29) having the same form and size äs the rollers (23) and being radially aligned with the coupling disk (18) concerned, whereby the reference body (29) performs a periodical axial movement relative to the coupling disk during a uniform rotation ofsaid coupling disk (18).

2. Safety coupling according to Claim I **characterized in that** the contour of the coupling track (25) is approximately sinusoidal on the outer radius.

3. Safety coupling according to Claim I or 2 **characterized in that** one of the coupling disks (17,18) comprises nests (22) embracing the rollers (23) by more than 180°.

4. Safety coupling according to Claim I or 2 **characterized in that** each of the coupling disks (17,18) is provided with a coupling track and that the rollers (23) are guided in a roller cage (40).

5. Safety coupling according to one of Claims 1-4 **characterized in that** the outer radius of the coupling track (25) is of approximately twice the size of the inner radius.

6. Safety coupling according to one of Claims 1-5 **characterized in that** two or more rollers (23) are series-arranged axially to each other.

## Revendications

1. Accouplement de surcharge comprenant deux disques d'accouplement (17, 18) dont au moins l'un présente un chemin d'accouplement (25) périodiquement variable en hauteur, sur lequel se déplacent en roulement des galets (23) prévus entre les disques d'accouplement, un carter (12) entourant les disques d'accouplement (17, 18), et un dispositif élastique (21) pressant les disques d'accouplement (17, 18) l'un contre l'autre et s'appuyant sur le carter (12), les galets étant disposés dans la direction radiale par rapport aux disques d'accouplement (17, 18) et maintenus les uns par rapport aux autres à une distance fixe correspondant à la périodicité d'au moins un chemin d'accouplement (25),
**caractérisé en ce que** le chemin d'accouplement (25) est constitué d'uns surface de chemin décrite par un corps de référence (29) orienté radialement par rapport au disque d'accouplement (18) correspondant et présentant la même forme et la même taille que les galets (23), qui exécute, pendant une rotation régulière de ce disque d'accouplement (18), un mouvement axial périodique par rapport au disque d'accouplement.

2. Accouplement de surcharge selon la revendication 1, **caractérisé en ce que** le profil du chemin d'accouplement (25) est sensiblement de forme sinusoïdale sur le rayon extérieur.

3. Accouplement de surcharge selon la revendication 1 ou 2, **caractérisé en ce que** l'un des disques d'accouplement (17, 18) présente des nids (22) qui entourent des galets (23) sur plus de 180°.

4. Accouplement de surcharge selon la revendication 1 ou 2, **caractérisé en ce que** chacun des disques d'accouplement (17, 18) présente un chemin d'accouplement, et **en ce que** les galets (23) sont guidés à l'intérieur d'une cage à galets (40).

5. Accouplement de surcharge selon l'une quelconque des revendications 1 à 4, **caractérisé en ce que** le rayon extérieur du chemin d'accouplement (25) est sensiblement deux fois plus grand que le rayon intérieur.

6. Accouplement de surcharge selon l'une quelconque des revendications 1 à 5, **caractérisé en ce que** deux galets (23) ou plus sont disposés dans chaque rangée axialement les uns par rapport aux autres.
